(19) Europäisches Patentamt

European Patent Office

Office européen des brevets

(11) **EP 1 471 232 B1**

(12) **FASCICULE DE BREVET EUROPEEN**

(45) Date de publication et mention
de la délivrance du brevet:
**26.04.2006 Bulletin 2006/17**

(51) Int Cl.:
*F02D 13/02* (2006.01)    *F01L 9/04* (2006.01)

(21) Numéro de dépôt: **04300089.2**

(22) Date de dépôt: **19.02.2004**

(54) **Procédé de commande des soupapes d'un moteur à combustion interne**

Verfahren zur Ventilsteuerung in einer Brennkraftmaschine

Method of valve operation in an internal combustion engine

(84) Etats contractants désignés:
**AT BE BG CH CY CZ DE DK EE ES FI FR GB GR HU IE IT LI LU MC NL PT RO SE SI SK TR**

(30) Priorité: **12.03.2003 FR 0303048**

(43) Date de publication de la demande:
**27.10.2004 Bulletin 2004/44**

(73) Titulaire: **Peugeot Citroen Automobiles S.A.**
**78140 Vélizy Villacoublay (FR)**

(72) Inventeur: **Turquis, Pascal**
**93800 Epinay sur Seine (FR)**

(74) Mandataire: **Grynwald, Albert et al**
**Cabinet Grynwald**
**94, rue Saint Lazare**
**75009 Paris (FR)**

(56) Documents cités:
**DE-A- 3 206 199        DE-A- 3 600 408**
**DE-A- 19 511 136       DE-A- 19 735 863**
**US-A- 5 056 486**

**Description**

L'invention concerne un procédé de commande des soupapes d'un moteur à combustion interne possédant au moins deux soupapes d'admission par cylindre comme on peut le voir dans US 5,056,486. Elle concerne également un système permettant de mettre en oeuvre le procédé de l'invention.

L'invention est applicable en particulier aux moteurs à 16 soupapes.

La réduction de la consommation en carburant des véhicules est un enjeu majeur auquel est confrontée l'industrie automobile.

Un des moyens de réduire cette consommation et/ou d'améliorer de façon significative l'agrément de conduite d'un véhicule équipé d'un moteur est d'augmenter le couple du moteur à bas régime, dans la zone la plus utilisée par le conducteur. Cette amélioration permet, pour une prestation équivalente, d'augmenter les rapports de démultiplication du véhicule, et par un effet induit de modification du point de fonctionnement, de réduire la consommation du véhicule.

Le couple d'un moteur est directement lié à la quantité d'air qu'il est possible de faire entrer dans les cylindres. Le remplissage, ou rendement volumétrique, d'un moteur caractérise sa capacité à admettre de l'air dans ses cylindres, compte tenu de conditions amont données (en pression, température et hygrométrie de l'air comburant). Pour les moteurs atmosphériques, les conditions amont dépendent principalement de l'atmosphère.

Le remplissage est défini comme le rapport de la masse d'air admise dans les cylindres à chaque cycle du moteur sur la masse du même volume d'air (la cylindrée du moteur) dans les conditions amont.

Le remplissage d'un moteur n'est pas constant sur toute la plage de régime. Certains phénomènes acoustiques du système composé des colonnes d'air depuis le plénum du répartiteur d'admission jusqu'aux soupapes, et du volume d'air des cylindres permettent d'améliorer ce remplissage à certains régimes.

Au régime de résonance de ce système, il est possible d'enfermer dans le cylindre une pression supérieure à la pression atmosphérique et de bénéficier ainsi d'une suralimentation naturelle. Ce phénomène est appelé effet Kadenacy, et correspond à la mise oeuvre d'un accord de Helmholtz, par analogie avec un résonateur de Helmholtz ou un système masse-ressort. Aux régimes où l'accord de Helmholtz intervient, le remplissage élevé permet au moteur de délivrer un niveau important de couple. La fréquence propre théorique de résonance de Helmholtz f est définie par la formule suivante :

$$f = \frac{c}{2\pi} \sqrt{\frac{S}{LV}}$$

dans laquelle :

-    c est la vitesse du son dans le milieu contenu dans le circuit d'admission,
-    S est la section moyenne d'un conduit d'admission (depuis le plénum du répartiteur d'admission jusqu'aux soupapes),
-    L est la longueur d'un conduit d'admission,
-    V est la demi-cylindrée plus le volume mort d'un cylindre.

A une géométrie de conduits d'admission et une cylindrée données correspond donc une fréquence propre théorique de résonance de Helmholtz unique.

Le régime théorique d'accord de Helmholtz N est donné par la formule :

$$N = 30 * f * 1/180$$

où:

-    f est la fréquence propre théorique de résonance de Helmholtz,
-    l est la largeur de la loi d'admission qui est le nombre de degrés vilebrequin pendant lesquels les soupapes d'admission sont levées de plus de 1mm.

Par ailleurs, il est possible d'augmenter le remplissage en air d'un moteur profitant d'un accord acoustique, dit de quart d'onde, dans le système composé des tubes primaires du répartiteur d'admission. Lors de la fermeture de la soupapes d'admission, l'arrêt brutal du mouvement rentrant de la colonne d'air présente dans le tube primaire associé à cette soupape, engendre une onde de surpression qui se propage vers l'entrée du tube primaire. Cette onde se réfléchit alors en changeant de signe (onde de dépression) car l'extrémité du tube primaire est ouverte sur un volume important : le «plenum» du répartiteur. Lorsque l'onde de dépression parvient au niveau de la soupape fermée elle se réfléchit sans changer de signe. Elle atteint à nouveau l'extrémité ouverte des tubes primaires et se réfléchit alors en onde de surpression.

En ajustant l'angle d'ouverture de la soupape d'admission, on peut bénéficier de cette onde de surpression pour augmenter le débit d'air rentrant en début d'admission et, ainsi, améliorer le remplissage.

La vitesse de propagation des ondes dans les conduits primaires étant conventionnellement notée C0, le temps de propagation d'une onde d'une extrémité à une autre d'un tube primaire de longueur $l_1$ est : $t = C0/l_1$. Compte tenu du changement de signe de l'onde lors de sa réflexion dans le plenum, celle-ci doit faire un nombre pair d'aller-retour dans le même conduit pour générer une surpression au niveau de la soupape. Si l'ouverture suivante de la soupape se produit au bout d'un temps multiple de $4*C0/l_1$, on bénéficiera de l'effet positif de l'onde acoustique à l'ouverture de la soupape admission.

En pratique, l'optimisation de ces effets acoustiques par le dimensionnement du système d'admission et le calage des lois d'ouverture des soupapes d'admission permettent généralement de bénéficier de ces effets dans une zone de régime limitée. Il en découle que lorsque l'on souhaite augmenter le remplissage, et donc le couple, à bas régime, il est en général nécessaire de modifier lesdits dimensionnements et calage, et cette modification se traduit par une dégradation des performances du moteur à haut régime.

Dans le cas des moteurs à 4 temps à essence conventionnels, l'ouverture et la fermeture des soupapes d'admission sont habituellement réalisées par un système mécanique qui conduit à une relation fixe entre la levée de soupapes et l'angle de rotation du moteur quel que soit le régime ou la charge du moteur. Ces moteurs sont qualifiés de moteurs à calage fixe d'arbres à cames.

Cependant, des systèmes de distribution variable sont en cours de développement, en particulier pour les moteurs 4 temps à essence.

Ainsi, plusieurs types de systèmes connus permettent de résoudre partiellement le problème mentionné ci-dessus :

- Les systèmes à acoustique variable comportent un dispositif mécanique permettant de faire varier la longueur des conduits d'admission et de faire varier ainsi la zone de régime bénéficiant d'un accord acoustique.
- Les systèmes à déphaseurs d'arbres à cames (VVT ou VTC) permettent une variation du calage du diagramme de levée des soupapes d'admission par rapport à la référence angulaire de rotation du moteur sans modification du diagramme de levée. La variation du calage peut être discrète ou continue.
- Les systèmes à distribution variable mécanique (« Valvetronic ») qui permettent de faire varier l'instant d'ouverture et la durée d'ouverture de manière identique pour toutes les soupapes d'admission.

Ces systèmes présentent l'inconvénient de nécessiter des arrangements ou des réglages mécaniques qui ne donnent pas entière satisfaction.

L'invention a donc pour but de fournir un système aisé à mettre en oeuvre et permettant d'améliorer notablement le remplissage en air des cylindres d'un moteur à combustion interne. Elle est particulièrement applicable dans les moteurs à combustion interne à essence atmosphérique équipés de systèmes de distribution variable commandant de manière indépendante les soupapes d'admission de chaque cylindre.

L'invention concerne donc un procédé de commande des soupapes d'admission d'un moteur à combustion interne comprenant au moins une première et une deuxième soupape par cylindre, chaque soupape permettant d'obturer ou d'ouvrir respectivement un premier et un deuxième conduit d'admission du cylindre et étant commandée cycliquement en ouverture et en fermeture. Lors de la fermeture des soupapes d'admission d'un cylindre, le procédé prévoit les étapes suivantes :

une première étape de fermeture de la première soupape,
puis une deuxième étape de fermeture de la deuxième soupape, le temps T séparant la fermeture de la première soupape de la fermeture de la deuxième soupape étant tel qu'il permet la propagation, vers la deuxième soupape, d'au moins une surpression créée, dans le premier conduit, par la fermeture de la première soupape.

Ainsi, contrairement aux moteurs connus à deux soupapes, on prévoit un décalage sensible entre les instants de fermeture des soupapes.

Le temps T est au moins équivalent au temps nécessaire pour qu'une onde acoustique parcourt le chemin séparant la première soupape de la deuxième soupape en utilisant les conduits d'admission.

Ce temps T a sensiblement pour valeur :

$$T = (k * 4 * L1 + L1 + Lint + L2)/C0 \quad \pm \lambda \, L1/C0$$

formule dans laquelle:

k est un nombre entier, de préférence compris entre 1 et 3,
L1 est la longueur du premier conduit d'admission,
L2 est la longueur du deuxième conduit d'admission,
Lint est la distance séparant les entrées des deux conduits d'admission opposées aux soupapes,
C0 est la vitesse du son dans le milieu contenu dans les conduits,
λ est un nombre compris entre 0 et 1, de préférence égal à zéro.

La fermeture de la première soupape est commandée au voisinage de la mi-course du piston après le point mort haut (PMH) et les ouvertures des soupapes d'admission sont commandées sensiblement aux mêmes instants. De plus, préférentiellement, les ouvertures des soupapes d'admission sont déclenchées sensiblement au point mort haut (PMH) du fonctionnement du moteur.

L'invention concerne également un système de commande des soupapes d'admission d'un moteur à combustion interne mettant en oeuvre le procédé selon l'invention. Ce système s'applique à un moteur comprenant au moins une première et une deuxième soupapes par cylindre, chaque soupape étant commandée cycliquement par un dispositif d'actionnement pour obturer ou ouvrir respectivement un premier et un deuxième conduits d'admission du cylindre. Une unité centrale de commande permet de commander les dispositifs d'actionnement, de façon à commander la fermeture de la première soupape, puis un temps T plus tard, la fermeture de la deuxième soupape. Ce temps T est au moins équivalent au temps nécessaire pour qu'une onde acoustique parcourt le chemin séparant la première soupape de la deuxième soupape en utilisant les conduits d'admission. Ce temps T pourra avoir pour valeur :

$$T = (k * 4 * L1 + L1 + Lint + L2)/C0 \quad \pm \lambda \, L1/C0$$

Formule dans laquelle:

k est un nombre entier, de préférence compris entre 1 et 3,
L1 est la longueur du premier conduit d'admission,
L2 est la longueur du deuxième conduit d'admission,
Lint est la distance séparant les entrées des deux conduits d'admission opposées aux soupapes,
C0 est la vitesse du son dans le milieu contenu dans lesdits conduits,
λ est un nombre compris entre 0 et 1, de préférence égal à zéro.

Selon une forme de réalisation de l'invention, l'unité centrale commande la fermeture de la première soupape au voisinage de la mi-course du piston après le point mort haut. De plus, elle commande les dispositifs d'actionnement de façon à obtenir les ouvertures des soupapes sensiblement aux mêmes instants. Ces ouvertures seront prévues sensiblement au point mort haut (PMH) du fonctionnement du moteur.

Egalement, selon une forme de réalisation de l'invention, les dispositifs d'actionnement seront des dispositifs d'actionnement électromagnétiques.

Les différents objets et caractéristiques de l'invention apparaîtront plus clairement dans la description qui va suivre et dans les figures annexées qui représentent :

- La figure 1, un schéma de principe d'un moteur permettant d'illustrer l'explication du procédé selon l'invention,
- la figure 2, un organigramme simplifié de fonctionnement du procédé selon l'invention,
- la figure 3, différentes phases de commande de l'admission d'un moteur selon l'invention,
- la figure 4, un organigramme plus détaillé de fonctionnement du procédé selon l'invention,
- la figure 5, des courbes de fonctionnement d'un moteur selon l'invention,
- la figure 6, des courbes de fonctionnement d'un moteur, et
- la figure 7, un exemple de système permettant de mettre en oeuvre le procédé selon l'invention.

On décrit ci-après un procédé de commande des soupapes d'admission d'un moteur à combustion interne selon l'invention.

L'invention va être décrite en application à un moteur 4 temps à combustion interne à essence atmosphérique équipé d'un système de distribution variable.

Le carburant est injecté dans chaque cylindre ou dans les conduits d'admission par l'intermédiaire d'un système d'alimentation en carburant sous pression. De plus, le moteur comporte au moins deux soupapes d'admission par cylindre. Enfin, l'air est réparti entre les cylindres par un système d'admission et chaque soupape de chaque cylindre est alimentée en air par un conduit indépendant au moins sur une partie aboutissant au siège de la soupape.

Il est à noter que l'alimentation en carburant peut être effectuée par l'un et/ou l'autre des deux conduits.

Par ailleurs, les commandes de déplacements des soupapes d'admission d'un même cylindre peuvent être réalisées de façon indépendantes les unes des autres et permettent un réglage des instants d'ouvertures des soupapes et des durées d'ouvertures.

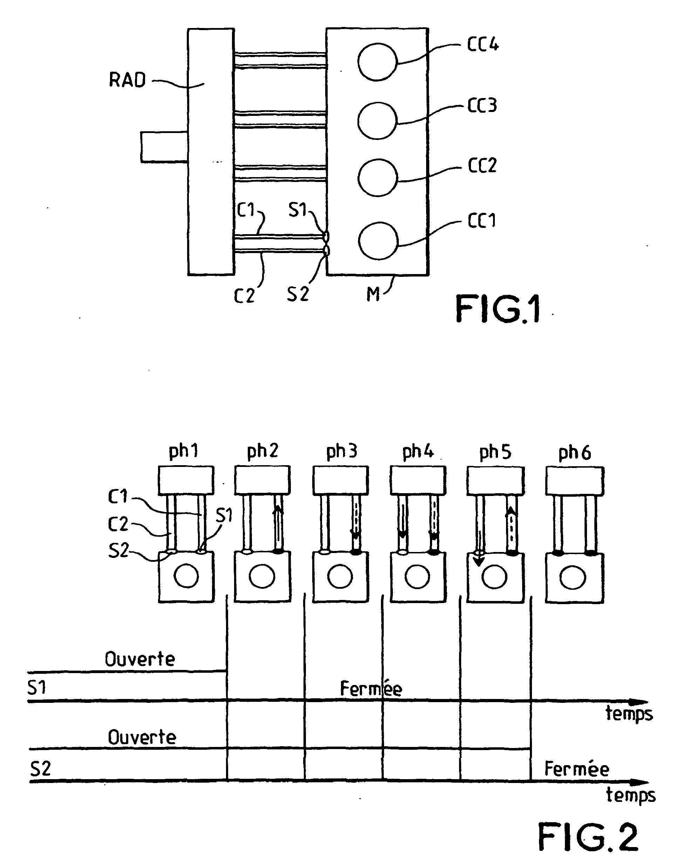

La figure 1 représente de façon schématique un moteur à combustion interne auquel s'applique l'invention. On trouve sur cette figure le moteur M proprement dit comportant quatre cylindres CC1, CC2, CC3 et CC4. Chaque cylindre est alimenté en air par des conduits d'admission tels que C1 et C2 pour le cylindre CC1. Chaque conduit d'admission est connecté d'un côté à un répartiteur d'admission RAD et d'un autre côté à un cylindre du moteur qu'il alimente. Chaque conduit d'admission se termine, du côté du cylindre, par une soupape, telle que S1 pour le conduit d'admission C1 et S2 pour le conduit d'admission C2, et qui permet, selon qu'elle est ouverte ou fermée, d'alimenter ou non en air le cylindre.

On va décrire, à l'aide de la figure 2, la commande des soupapes d'admission S1 et S2 du cylindre CC1 et donc l'alimentation en air de ce cylindre.

Pour la compréhension des figures, les soupapes fermées sont représentées noircies sur les figures, tandis que les soupapes ouvertes sont représentées sous forme claire.

Dans une première phase notée ph1 les deux soupapes S1 et S2 sont ouvertes comme cela est représenté sur les diagrammes des temps représentés en bas de la figure 2.

Au cours de la phase ph2, ou avant cette phase, la soupape S1 est fermée. Il se produit alors une onde de pression à la fermeture de cette soupape et plus la vitesse des gaz d'admission est élevée au moment de la fermeture, plus la surpression générée est élevée. La surpression est donc maximum lorsqu'on ferme la soupape au voisinage de la mi-course du piston (90° après le point mort haut).

La surpression produite se propage dans le conduit C1 en sens inverse de l'alimentation normale, c'est-à-dire vers le répartiteur d'admission RAD.

En phase ph3, la surpression arrive à l'extrémité du conduit d'admission C1 qui se trouve du côté du répartiteur d'admission. Cette surpression se propage pour une partie dans le répartiteur d'admission, et donc vers le conduit d'admission C2 de la soupape S2 situé à proximité immédiate du conduit d'admission C1, et est réfléchie, pour une autre partie, en changeant de signe, dans le conduit d'admission C1 vers la soupape S1.

En phase ph4, il se produit donc, dans le conduit d'admission C1, une dépression représentée par une flèche en trait interrompu et qui se dirige vers la soupape S1. Dans le conduit d'admission C2, il se produit une surpression représentée par une flèche en trait continu et qui se dirige vers la soupape S2.

En phase ph5, l'onde de dépression, se propageant dans le conduit d'admission C1, arrive sur la soupape S1 qui est fermée. Cette onde de dépression se réfléchit alors dans le conduit d'admission C1 en sens inverse. Pendant ce temps, dans le conduit d'admission C2 l'onde de surpression provoque un afflux supplémentaire d'air dans le cylindre CC1 par la soupape S2 qui est ouverte.

A l'issue de la phase ph5, la soupape S2 est fermée comme représenté sur le diagramme des temps apparaissant en bas de la figure 2.

On se trouve donc en phase ph6 où les deux soupapes S1 et S2 sont fermées.

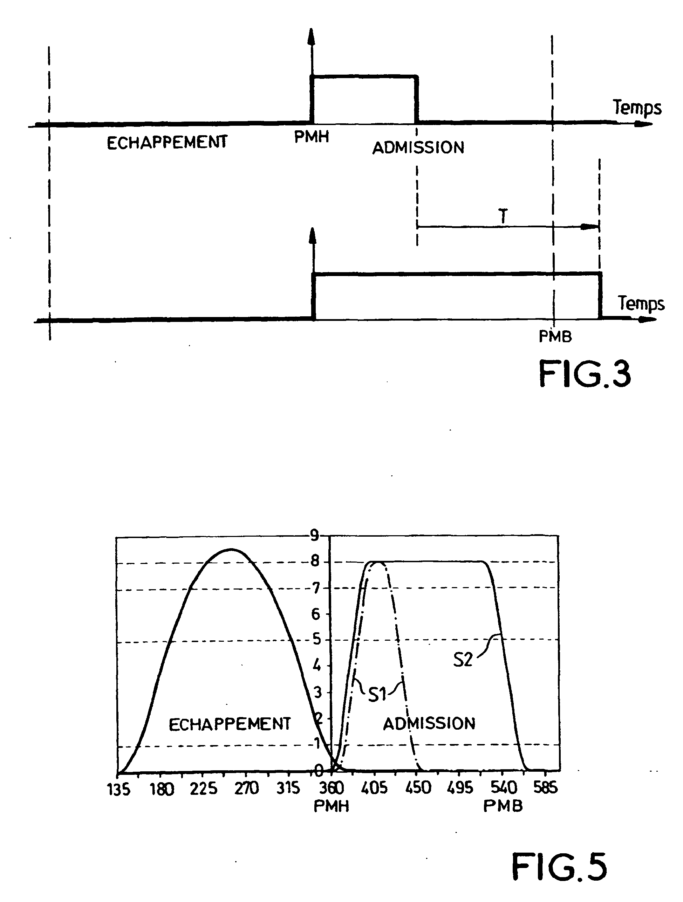

La figure 3 représente la commande des soupapes d'admission S1 et S2 dans le cadre d'un cycle de fonctionnement d'un moteur. Durant la phase d'échappement les soupapes S1 et S2 sont évidemment fermées. Durant la phase d'admission, les soupapes S1 et S2 sont ouvertes à partir du PMH (point mort haut). La soupape d'admission S1 est ensuite fermée. Comme indiqué précédemment, cette fermeture est réalisée de préférence sensiblement à mi-course de la phase de l'admission. Ensuite, la soupape S2 est fermée après le PMB (point mort bas) et de toutes façons après un temps T permettant à l'onde de surpression créée par la fermeture de la soupape S1 d'atteindre la soupape S2. Dans le cas du fonctionnement de la figure 2, le temps T correspond au moins au temps mis par l'onde de surpression pour : parcourir le conduit d'admission C1, atteindre l'entrée du conduit d'admission C2, et parcourir le conduit d'admission C2. Si C0 est la vitesse du son dans le milieu contenu dans les conduits d'admission et dans le répartiteur d'admission, ce temps T est donc :

$$T = (L1 + Lint + L2)/C0$$

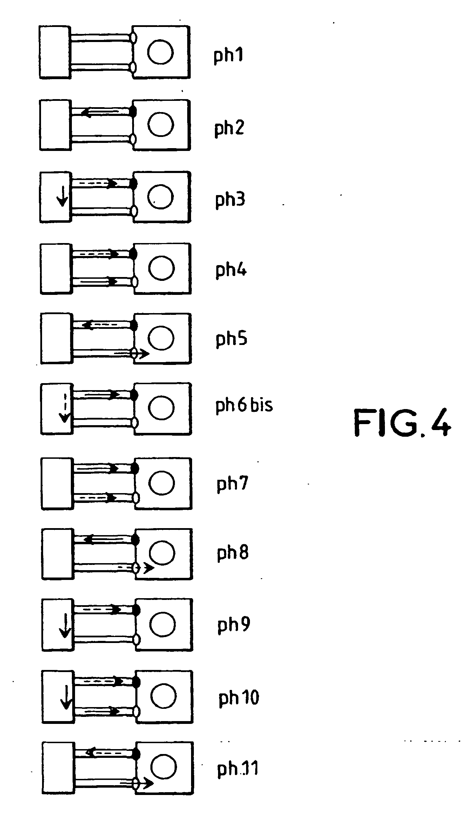

En général, contrairement à ce qui a été décrit avec la figure 2, les ondes feront plus qu'un aller et retour entre la fermeture de la soupape S1 et la fermeture de la soupape S2. La figure 4 représente, par exemple, un tel processus. On retrouve dans ce processus, les phases ph1 à ph5 de la figure 2. Par contre, après la phase ph5, la soupape S2 n'est pas fermée. Au cours de la phase suivante, notée ph6bis sur la figure 4, et au cours des phases suivantes, le processus continue. L'onde de dépression réfléchie par la soupape S1 (au cours de la phase ph5) est transmise pour une partie dans le répartiteur d'admission vers le conduit d'admission C2 et est réfléchie en changeant de signe vers la soupape S1.

Au cours de la phase ph7, une surpression est transmise vers la soupape S1 et une dépression vers la soupape S2.

En phase ph8, l'onde de surpression se réfléchit sans changement de signe sur la soupape S1 qui est fermée. L'onde de dépression pénètre dans le cylindre par le siège de la soupape S2 et provoque une diminution temporaire de débit d'air dans le cylindre.

En phase ph9 l'onde de surpression qui arrive de la soupape S1, se propage pour une partie dans le répartiteur d'admission vers le conduit d'admission C2 et se réfléchit, pour une autre partie, en changeant de signe, vers la soupape S1.

Dans ces conditions, en phase ph10, une onde de dépression se propage dans le conduit d'admission C1 vers la soupape S1 et une onde de surpression se propage dans le conduit d'admission C2 vers la soupape S2.

En phase ph11, l'onde de dépression se réfléchit sur la soupape fermée S1 et l'onde de surpression pénètre dans le cylindre par le siège de soupape S2 provoquant une augmentation du débit d'air dans le cylindre. On se retrouve donc dans la même situation que dans la phase ph5 de la figure 2.

On comprend ainsi que le processus pourrait encore continuer. Mais à ce stade de fonctionnement le parcours de l'onde de surpression qui pénètre dans le cylindre en phase ph11 a parcouru un trajet de longueur :

$$5L1 + Lint + L2$$

Une surpression suivante parcourrait un trajet de longueur :

$$9L1 + Lint + L2$$

Dans ces conditions, le temps que l'on doit prévoir entre la fermeture de la soupape S1 et la soupape S2 doit être sensiblement égal à :

$$T = (4kL1 + L1 + Lint + L2)/C0$$

où k est un nombre entier.

En ce qui concerne les ondes de dépression, on constate qu'elles arrivent dans le cylindre par la soupape S2 au bout d'un temps, après la fermeture de la soupape S1, de

$$(4kL1 + 3L1 + Lint + L2)/C0$$

Le temps qui sépare une onde de surpression d'une onde de dépression est donc de $2L1/C0$. La zone bénéfique où la surpression est maximale dans le cylindre se situe donc autour du maximum de surpression et a pour durée $\pm L1/C0$ par rapport à ce maximum.

On aura donc intérêt, par exemple, à fermer la soupape S2 à un temps :

$$T2 = (4kL1 + L1 + Lint + L2)/C0.$$

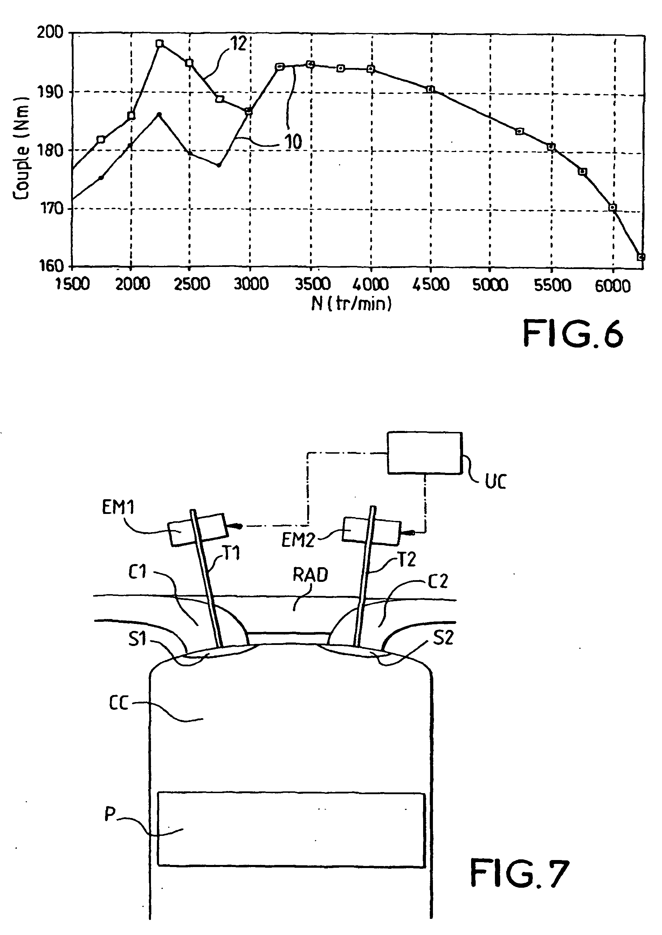

Le diagramme de la figure 5 représente Le fonctionnement d'un cylindre d'un moteur commandé avec le procédé selon l'invention. Sur ce diagramme, on a porté en ordonnées la levée de soupape en mm.

Ce type de diagramme peut être utilisé de préférence à bas et moyen régimes. Il prévoit :

- une fermeture de la soupape S1 aux environs de la mi-course du piston,
- une fermeture de la soupape S2 après le PMB admission, lorsque la surpression a pénétré dans le cylindre,

- un temps entre la fermeture de la soupape d'admission S1 et la fermeture de la soupape d'admission S2 de $(k*4*L1+L1+Lint+L2)/C0 \pm \lambda L1/C0$ ($\lambda$ compris entre 0 et 1), afin de bénéficier de la surpression engendrée par la première fermeture.

La figure 7 représente un système permettant de mettre en oeuvre le procédé de l'invention.

Cette figure est un schéma de principe d'un cylindre de moteur CC avec son piston P et deux soupapes d'admission S1 et S2. Les soupapes d'échappement n'ont pas été représentées sur cette figure.

Des conduits d'admission C1 et C2 aboutissent sur la partie supérieure du cylindre et permettent de relier un répartiteur d'admission RAD au cylindre CC. Les soupapes S1 et S2 permettent d'obturer ces conduits ou permettent la communication entre les conduits et le cylindre.

Les soupapes S1 et S2 sont solidaires de tiges de commande T1 et T2. Dans l'exemple de la figure 7, ces tiges sont commandées par des dispositifs d'actionnement électromagnétiques ou électromécaniques EM1 et EM2.

L'alimentation en courant électrique des électroaimants de ces dispositifs d'actionnement est commandée par une unité centrale de commande UC.

L'unité centrale de commande UC gère donc le fonctionnement des soupapes. En fonction de la position du piston, l'unité centrale de commande provoque la fermeture de la soupape S1 après que le piston a passé le PMH (point mort haut). Comme décrit précédemment, il commande ensuite la fermeture de la soupape S2 sensiblement au bout d'un temps

$$T = (k*4*L1+L1+Lint+L2)/C0$$

Plus précisément, on pourra prévoir un temps:

$$T = (k*4*L1+L1+Lint+L2)/C0 \quad \pm \lambda L1/C0.$$

Dans l'exemple de réalisation qu'on vient de décrire, on a considéré une commande électromagnétique ou électromécanique des soupapes. Mais sans sortir du cadre l'invention, cette commande pourrait être d'une autre nature. Notamment, on pourrait prévoir :

une distribution à arbre à cames et un système additionnel (hydraulique, électromagnétique...) permettant d'ouvrir et fermer les conduits d'admission au cours de la phase d'admission,

- des soupapes d'admission pilotées, sans arbres à cames, par exemple par un mécanisme électrohydraulique ou un mécanisme électromécanique.

Dans ce qui précède, on a décrit le fonctionnement de l'invention en application à un cylindre d'un moteur à combustion interne. Il est clair que le fonctionnement appliqué aux autres cylindres est le même. Plus précisément on prévoira que toutes les soupapes S1 des différents cylindres, d'une part, et toutes les soupapes S2, d'autre part, fonctionnent en même temps.

On voit donc que l'invention concerne une stratégie d'admission de l'air dans les cylindres permettant d'étendre aux faibles régimes la plage de fonctionnement d'un moteur où l'on bénéficie des gains en remplissage liés à l'accord de type quart d'onde, sans changement du dimensionnement du répartiteur d'admission, et donc sans dégradation à haut régime.

Le principe est de générer, pendant la phase d'admission, une onde de pression avec l'une des soupapes, qui va permettre d'obtenir une surpression au niveau de l'autre soupape, juste avant la fermeture de celle-ci.

De plus le système de l'invention permet d'obtenir une meilleure préparation du mélange (homogénéisation air-essence) en créant tout d'abord un mouvement d'air symétrique des deux conduits d'admission du cylindre, puis en modifiant fortement le type d'écoulement au moment de la fermeture de la première soupape S1, générant ainsi un brassage des gaz admis dans le cylindre:

A titre d'exemple, le diagramme de la figure 6 illustre les gains en couple à bas régime apportés par le système de l'invention pour un moteur 4 cylindres de 2 litres. La courbe 10 correspond au couple obtenu lorsque les soupapes S1 et S2 se ferment simultanément et la courbe 12 correspond à une commande des soupapes S1 et S2 selon l'invention. On observe une nette amélioration du couple à bas régime.

**Revendications**

1. Procédé de commande d'ouverture et de fermeture des soupapes d'admission d'un moteur à combustion interne comprenant une première et une deuxième soupapes (S1 et S2) par cylindre (CC), à l'exclusion de toute autre soupape d'admission, chaque soupape permettant d'obturer ou d'ouvrir respectivement un premier et un deuxième conduits d'admission (C1, C2) du cylindre et étant commandée cycliquement en ouverture et en fermeture, **caractérisé en ce qu'**il comporte, lors de la fermeture des soupapes d'admission d'un cylindre, les étapes suivantes :

    • une première étape de fermeture de la première soupape (S1),
    • puis une deuxième étape de fermeture de la deuxième soupape (S2), le temps (T) séparant la fermeture de la première soupape (S1) de la fermeture de la deuxième soupape étant tel qu'il permet la propagation, vers la deuxième soupape (S2), d'au moins une surpression créée, dans le premier conduit (C1), par la fermeture de la première soupape (S1).

2. Procédé selon la revendication 1, **caractérisé en ce que** ledit temps (T) est au moins équivalent au temps nécessaire pour qu'une onde acoustique parcourt le chemin séparant la première soupape (S1) de la deuxième soupape (S2) en utilisant les conduits d'admission.

3. Procédé selon la revendication 1 ou 2, **caractérisé en ce que** ledit temps (T) a sensiblement pour valeur :

$$T = (k * 4 * L1 + L1 + Lint + L2)/C0 \quad \pm \lambda\ L1/C0$$

    formule dans laquelle:

    - k est un nombre entier,
    - L1 est la longueur du premier conduit d'admission (C1),
    - L2 est la longueur du deuxième conduit d'admission (C2),
    - Lint est la distance séparant les entrées des deux conduits d'admission opposées aux soupapes,
    - C0 est la vitesse du son dans le milieu contenu dans lesdits conduits, et
    - λ est un nombre compris entre 0 et 1, de préférence égal à zéro.

4. Procédé de commande des soupapes d'admission d'un moteur à combustion interne selon la revendication 3, **caractérisé en ce que** k a pour valeur 1, 2 ou 3.

5. Procédé selon l'une des revendications précédentes, **caractérisé en ce que** la fermeture de la première soupape (S1) est commandée au voisinage de la mi-course du piston après le point mort haut.

6. Procédé selon la revendication 5, **caractérisé en ce que** les ouvertures des soupapes (S1 et S2) sont commandées sensiblement aux mêmes instants.

7. Procédé selon la revendication 5 ou 6, **caractérisé en ce que** les ouvertures des soupapes (S1 et S2) sont déclenchées sensiblement au point mort haut (PMH) du fonctionnement du moteur.

8. Système de commande d'ouverture et fermeture des soupapes d'admission d'un moteur à combustion interne comprenant une première et une deuxième soupapes (S1 et S2) par cylindre (CC), à l'exclusion de toute autre soupape d'admission, chaque soupape étant commandée cycliquement par un dispositif d'actionnement (EM1, EM2) pour obturer ou ouvrir respectivement un premier et un deuxième conduits d'admission (C1, C2) du cylindre, **caractérisé en ce qu'**il comporte une unité centrale de commande (UC) permettant de commander les dispositifs d'actionnement (EM1, EM2), aux fermetures des soupapes, de façon à commander la fermeture de la première soupape (S1), puis un temps (T) plus tard, la fermeture de la deuxième soupape (S2), et **en ce que** le temps (T) est tel qu'il permet la propagation, vers la deuxième soupape (S2), d'au moins une surpression créée, dans le premier conduit (C1), par la fermeture de la première soupape (S1).

9. Système selon la revendication 8, **caractérisé en ce que** ledit temps (T) est au moins équivalent au temps nécessaire pour qu'une onde acoustique parcourt le chemin séparant la première soupape (S1) de la deuxième soupape (S2) en utilisant les conduits d'admission.

**10.** Système selon la revendication 8 ou 9, **caractérisé en ce que** ledit temps (T) a sensiblement pour valeur :

$$T = (k * 4 * L1 + L1 + Lint + L2)/C0 \quad \pm \lambda \ L1/C0,$$

formule dans laquelle:

- k est un nombre entier,
- L1 est la longueur du premier conduit d'admission (C1),
- L2 est la longueur du deuxième conduit d'admission (C2).
- Lint est la distance séparant les entrées des deux conduits d'admission opposées aux soupapes, et
- C0 est la vitesse du son dans le milieu contenu dans lesdits conduits, et
- λ est un nombre compris entre 0 et 1, de préférence égal à zéro.

**11.** Système selon la revendication 10, **caractérisé en ce que** k a pour valeur 1, 2 ou 3.

**12.** Système selon l'une des revendications 8 à 11, **caractérisé en ce que** l'unité de commande (UC) commande la fermeture de la première soupape (S1) au voisinage de la mi-course du piston après le point mort haut.

**13.** Système selon la revendication 12, **caractérisé en ce que** l'unité de commande (UC) commande les dispositifs d'actionnement (EM1, EM2) de façon à obtenir les ouvertures des soupapes (S1 et S2) sensiblement aux mêmes instants.

**14.** Système selon la revendication 13, **caractérisé en ce que** l'unité de commande (UC) commande les dispositifs d'actionnement (EM1, EM2) de façon que les ouvertures des soupapes (S1, et S2) se produisent sensiblement au point mort haut (PMH) du fonctionnement du moteur.

**15.** Système selon l'une des revendications 8 à 14, **caractérisé en ce que** les dispositifs d'actionnement (EM1, EM2) sont des dispositifs d'actionnement électromagnétique ou électromécanique.

**Patentansprüche**

**1.** Verfahren zum Steuern des Öffnens und Schließens der Ansaugventile eines Motors mit innerer Verbrennung, ein erstes und ein zweites Ventil (S1 und S2) je Zylinder (CC) aufweisend, bei Ausschluss jedes anderen Ansaugventils, wobei jedes Ventil jeweils eine erste und eine zweite Ansaugleitung (C1, C2) des Zylinders verschließt oder öffnet und zyklisch angesteuert wird, um zu öffnen und zu schließen, **dadurch gekennzeichnet, dass** es beim Schließen der Ansaugventile eines Zylinders die folgenden Schritte umfasst:

• einen ersten Schritt zum Schließen des ersten Ventils (S1).
• danach einen zweiten Schritt zum Schließen des zweiten Ventils (S2), wobei die Zeit (T), die das Schließen des ersten Ventils (S1) vom Schließen des zweiten Ventils trennt, derart ist, dass mindestens ein in der ersten Leitung (C1) erzeugter Überdruck in Richtung des zweiten Ventils (S2) durch das Schließen des ersten Ventils (S1) übertragen werden kann.

**2.** Verfahren nach Anspruch 1, **dadurch gekennzeichnet, dass** die besagte Zeit (T) mindestens der Zeit entspricht, die notwendig ist, damit eine akustische Welle den Weg, der das erste Ventil (S1) vom zweiten Ventil (S2) trennt, durch die Ansaugleitungen zurücklegen kann.

**3.** Verfahren nach Anspruch 1 oder 2, **dadurch gekennzeichnet, dass** die besagte Zeit (T) etwa als Wert hat:

$$T = (k * 4 * L1 + L1 + Lint + L2)/C0 \quad \pm \lambda \ L1/C0$$

wobei in dieser Formel

- k eine ganze Zahl ist,
- L1 die Länge der ersten Ansaugleitung (C1) ist,
- L2 die Länge der zweiten Ansaugleitung (C2) ist,
- Lint die Entfernung ist, welche die Eingänge der beiden den Ventilen gegenüberliegenden Ansaugleitungen trennt,
- C0 die Geschwindigkeit des Schalls in dem Medium ist, das die besagten Leitungen enthalten, und
- λ eine Zahl zwischen 0 und 1 ist, vorzugsweise gleich Null.

4. Verfahren zur Steuerung der Ansaugventile eines Motors mit innerer Verbrennung nach Anspruch 3, **dadurch gekennzeichnet, dass** k als Wert 1, 2 oder 3 hat.

5. Verfahren nach einem der vorhergehenden Ansprüche, **dadurch gekennzeichnet, dass** das Schließen des ersten Ventils (S1) etwa auf halbem Wege des Kolbens nach dem oberen Todpunkt gesteuert wird.

6. Verfahren nach Anspruch 5, **dadurch gekennzeichnet, dass** das Öffnen der Ventile (S1 und S2) etwa gleichzeitig gesteuert wird.

7. Verfahren nach Anspruch 5 oder 6, **dadurch gekennzeichnet, dass** das Öffnen der Ventile (S1 und S2) etwa am oberen Todpunkt (PMH) der Motorfunktion ausgelöst wird.

8. System zum Steuern des Öffnens und Schließens der Ansaugventile eines Motors mit innerer Verbrennung, ein erstes und ein zweites Ventil (S1 und S2) je Zylinder (CC) aufweisend, bei Ausschluss jedes anderen Ansaugventils, wobei jedes Ventil zyklisch durch eine Betätigungsvorrichtung (EM1, EM2) gesteuert wird, um jeweils eine erste und eine zweite Ansaugleitung (C1, C2) des Zylinders zu schließen oder zu öffnen, **dadurch gekennzeichnet, dass** es eine zentrale Steuereinheit (UC) umfasst, mit der die Betätigungsvorrichtungen (EM1, EM2) beim Schließen der Ventile derart steuerbar sind, dass das Schließen des ersten Ventils (S1) gesteuert wird, danach eine Zeit (T) später das Schließen des zweiten Ventils (S2), und **dadurch**, dass die Zeit (T) derart ist, das mindestens ein in der ersten Leitung (C1) erzeugter Überdruck in Richtung des zweiten Ventils (S2) durch Schließen des ersten Ventils (S1) übertragen werden kann.

9. System nach Anspruch 8, **dadurch gekennzeichnet, dass** die Zeit (T) mindestens der Zeit entspricht, die notwendig ist, damit eine akustische Welle den Weg durchläuft, der das erste Ventil (S1) vom zweiten Ventil (S2) trennt und dabei die Ansaugleitungen benutzt.

10. System nach Anspruch 8 oder 9, **dadurch gekennzeichnet, dass** die besagte Zeit (T) etwa als Wert hat:

$$T = (k * 4 * L1 + L1 + Lint + L2)/C0 \pm \lambda\ L1/C0$$

wobei in dieser Formel

- k eine ganze Zahl ist,
- L1 die Länge der ersten Ansaugleitung (C1) ist,
- L2 die Länge der zweiten Ansaugleitung (C2) ist,
- Lint die Entfernung ist, welche die Eingänge der beiden den Ventilen gegenüberliegenden Ansaugleitungen trennt,
- C0 die Geschwindigkeit des Schalls in dem Medium ist, das die besagten Leitungen enthalten, und
- λ eine Zahl zwischen 0 und 1 ist, vorzugsweise gleich Null.

11. System nach Anspruch 10, **dadurch gekennzeichnet, dass** K als Wert 1, 2 oder 3 hat.

12. System nach einem der Ansprüche 8 bis 11, **dadurch gekennzeichnet, dass** die Steuereinheit (UC) das Schließen des ersten Ventils (S1) etwa auf halbem Wege des Kolbens nach dem oberen Todpunkt steuert.

13. System nach Anspruch 12, **dadurch gekennzeichnet, dass** die Steuereinheit (UC) die Betätigungsvorrichtungen (EM1, EM2) derart steuert, dass die Ventile (S1, S2) etwa gleichzeitig geöffnet werden.

**14.** System nach Anspruch 13, **dadurch gekennzeichnet, dass** die Steuereinheit (UC) die Betätigungsvorrichtungen (EM1, EM2) derart steuert, dass die Ventile (S1 und S2) etwa am oberen Todpunkt (PMH) der Motorfunktion öffnen.

**15.** System nach einem der Ansprüche 8 bis 14, **dadurch gekennzeichnet, dass** die Betätigungsvorrichtungen (EM1, EM2) elektromagnetische oder elektromechanische Betätigungsvorrichtungen sind.

**Claims**

**1.** Process for controlling the opening and the closing of intake valves of an internal combustion engine comprising a first and a second valve (S1 and S2) per said cylinder (CC), exclusive of any other intake valve, each valve permitting a first and a second intake port (C1, C2), of the cylinder, respectively, to be closed or opened, and being actuated cyclically in terms of opening and closing, **characterized in that** it comprises the following steps during the closing of the intake valves of a cylinder:

a first step of closing of the first valve (S1),
then a second step of closing of the second valve (S2), the time (T) between the closing of the first valve (S1) and the closing of the second valve being such that it permits the propagation toward the second valve (S2) of at least one overpressure generated in the first port (C1) by the closing of the first valve (S1).

**2.** Process in accordance with claim 1, **characterized in that** the time (T)) is at least equivalent to the time necessary for an acoustic wave to travel over the path between the first valve (S1) and the second valve (S2), using the intake ports.

**3.** Process in accordance with claim 1 or 2, **characterized in that** the value of the time (T) approximately equals:

$$T = (k * 4 * L1 + L1 + Lint + L2)/C0 \pm \lambda \ L1/C0,$$

in which formula
k is an integer;
L1 is the length of the first intake port (C1);
L2 is the length of the second intake port (C2);
Lint is the distance between the inlets of the two said intake ports located opposite the valves;
C0 is the velocity of sound in the medium contained in the ports, and
$\lambda$ is a number between 0 and 1 and preferably equal to zero.

**4.** Process for controlling the intake valves of an internal combustion engine in accordance with claim 3, **characterized in that** k has a value of 1, 2 or 3.

**5.** Process in accordance with one of the above claims, **characterized in that** the closing of the first valve (S1) is actuated in the vicinity of the mid-course of the piston after the top dead center.

**6.** Process in accordance with claim 5, **characterized in that** the openings of the valves (S1 and S2) are actuated at approximately the same moments.

**7.** Process in accordance with claim 5 or 6, **characterized in that** the openings of the valves (S1 and S2) are triggered approximately at the top dead center (TDC) of the operation of the engine.

**8.** System for controlling the opening and closing of the intake valves of an internal combustion engine comprising one first and second valves (S1 and S2) per said cylinder (CC), exclusive of any other intake valve, each valve being actuated cyclically by a actuating device (EM1, EM2) to close or open a first and second intake ports (C1, C2) of the cylinder, respectively, **characterized in that** it comprises a central control unit (CU) that makes it possible to control the actuating devices (EM1, EM2) in terms of the closing of the valves in such a way as to actuate the closing of the first valve (S1) and, then, a time (T) later, the closing of the second valve (S2) and **in that** the time (T) is such that it permits the propagation toward the second valve (S2) of at least one overpressure generated in the first port (C1) by the closing of the first valve (S1).

9. System in accordance with claim 8, **characterized in that** the time (T) is at least equivalent to the time necessary for an acoustic wave to travel over the path between the first valve (S1) and the second valve (S2) using the intake ports.

10. System in accordance with claim 8 or 9, **characterized in that** the value of the time (T) is approximately

$$T = (k * 4 * L1 + L1 + Lint + L2)/C0 \pm \lambda L1/C0,$$

in which formula
k is an integer,
L1 is the length of the first intake port (C1),
L2 is the length of the second intake port (C2),
lint is the distance between the inlets of the two intake ports located opposite the valves, and
C0 is the velocity of sound in the medium contained in the ports, and
$\lambda$ is a number between 0 and 1 and preferably zero.

11. System in accordance with claim 10, **characterized in that** k has a value of 1, 2 or 3.

12. System in accordance with one of the claims 8 to 11, **characterized in that** the central control unit (CU) controls the closing of the first valve (S1) in the vicinity of the mid-course of the piston after the top dead center.

13. System in accordance with claim 12, **characterized in that** the central control unit (CU) controls the actuating devices (EM1, EM2) in such a way as to achieve the openings of the valves (S1 and S2) at approximately the same moments.

14. System in accordance with claim 13, **characterized in that** the central control unit (CU) controls the actuating devices (EM1, EM2) in such a way that the openings of the valves (S1 and S2) take place approximately at the top dead center (TDC) of the operation of the engine.

15. System in accordance with one of the claims 8 to 14, **characterized in that** the actuating devices (EM1, EM2) are electromagnetic or electromechanical actuating devices.

RAO

CC4

CC3

CC2

CC1

C1  S1

C2  S2

M

FIG.1

ph1    ph2    ph3    ph4    ph5    ph6

C1
C2
S2
S1

Ouverte

S1

Fermée

temps

Ouverte

S2

Fermée

temps

FIG.2

Temps

ECHAPPEMENT    PMH    ADMISSION

T

Temps

PMB

## FIG.3

9
8
7
6
5
4
3
2
1
0

ECHAPPEMENT

ADMISSION

S1

S2

135   180   225   270   315   360   405   450   495   540   585
PMH                       PMB

## FIG.5

ph1

ph2

ph3

ph4

ph5

ph6bis

ph7

ph8

ph9

ph10

ph11

FIG.4

**FIG.6**

**FIG.7**